# EUROPEAN PATENT SPECIFICATION

(11) **EP 4 457 308 B1**
(45) Date of publication and mention of the grant of the patent: **27.05.2026**
(21) Application number: 22839397.1
(22) Date of filing: 30.12.2022
(51) Int. Cl.: C10G 3/00, C10G 65/04, C10L 1/08

(54) **HYDROCARBONS PRODUCED FROM ORGANIC MATERIAL OF BIOLOGICAL ORIGIN**
AUS ORGANISCHEM MATERIAL BIOLOGISCHEN URSPRUNGS HERGESTELLTE KOHLENWASSERSTOFFE
HYDROCARBURES PRODUITS À PARTIR D'UN MATÉRIAU ORGANIQUE D'ORIGINE BIOLOGIQUE

(30) Priority: 30.12.2021 FI 20216368; 30.12.2021 FI 20216369; 30.12.2021 FI 20216372; 30.12.2021 FI 20216374; 30.12.2021 FI 20216376
(43) Date of publication of application: 06.11.2024
(73) Proprietor: Neste Oyj, 02150 Espoo (FI)
(72) Inventor: HOVI, Meri, 06101 Porvoo (FI); SIPPOLA, Väinö, 06101 Porvoo (FI); AALTO, Pekka, 06101 Porvoo (FI); MYLLYOJA, Jukka, 06101 Porvoo (FI); LAMMINPÄÄ, Kaisa, 06101 Porvoo (FI); RIEKKKOLA, Tiina, 06101 Porvoo (FI); PASANEN, Antti, 06101 Porvoo (FI); LINDQVIST, Petri, 06101 Porvoo (FI); TOPPINEN, Sami, 06101 Porvoo (FI); KYLLÖNEN, Pia, 06101 Porvoo (FI); VUORIO, Eerika, 06101 Porvoo (FI); LIPPONEN, Katriina, 06101 Porvoo (FI); SAIKKONEN, Pirjo, 06101 Porvoo (FI); KIISKI, Ulla, 06101 Porvoo (FI)
(74) Representative: Kolster Oy Ab
(86) International application number: PCT/FI2022/050882
(87) International publication number: WO 2023/126583

(56) References cited:
- EP-A1- 1 795 576
- EP-A1- 2 141 217
- EP-B1- 1 960 497
- AU-A1- 2017 279 689
- FR-A1- 3 004 722
- US-A1- 2018 044 601

## Description

### FIELD OF THE INVENTION

The present description relates to a process outside of the scope of the invention of producing hydrocarbons from organic material of biological origin, in particular organic material of biological origin comprising a high amount of impurities, such as nitrogen, silicon, chloride and phosphorus containing compounds, as well as metals. The presented process is particularly suitable for challenging feedstock, which would typically not be introduced to a hydrogenation process using sensitive catalysts. The present invention relates to a hydrocarbon fuel composition suitable for diesel engines.

### BACKGROUND OF THE INVENTION

Various oils and fats have been used as feedstock in production of middle distillate components suitable as fuels especially for diesel engines. The purpose of using renewable and recycled organic material of biological origin in production of fuel components is mainly to reduce the use of fossil based feedstock and thereby to tackle global warming and other environmental issues. Hydrogenated vegetable oil (HVO) is a promising alternative to fossil based middle distillate fuels. Although HVO is mainly produced from vegetable oils, also other sources such as animal fats and algae oils can be used. There is still a need for alternative non-fossil based sources and processes to produce especially middle distillate fuels.

Many organic material sources that could be used to produce hydrocarbon components, contain high amounts of impurities such as nitrogen, silicon, chloride and phosphorous containing compounds and metals. These and other impurities weaken the possibility of many organic materials to be used as feedstock or lowers the quality of the products.

Many previous methods have suggested various pre-treatment and purification processes for feedstock contain high amounts of impurities. There is also a need for new over all processes to handle feedstock with high amounts of impurities, as well as other feedstock.

Patent publication US20180044601 discloses a method for producing a hydrocarbon composition, comprising the steps hydroprocessing a biological feedstock using one or more catalysts, and fractionating the processed biological feedstock.

Patent publication EP1795576 discloses a process for converting a feedstock originating from renewable sources to branched and saturated hydrocarbons with heteroatoms in the diesel fuel distillation range by skeletal isomerisation and deoxygenation carried out by hydrodeoxygenation or alternatively by combined decarboxylation and decarbonylation reactions, whereby the consumption of hydrogen is decreased.

### BRIEF DESCRIPTION OF THE INVENTION

Presented is a method or process, which is particularly suitable for challenging feedstock that typically contain high amounts of impurities. With challenging feedstock is meant herein low-quality feedstock containing e.g. phosphorus and metal impurities, which are difficult to remove by regular pretreatment methods, such as degumming or bleaching, and which cause problems for catalysts, such as deactivation, when used in the subsequent hydrotreatment processes. Moreover, challenging feedstock may include chemically challenging materials like resin acids and unsaponifiable matter included in e.g. crude tall oil. Low-quality feedstock would typically not be introduced to a hydrogenation process using sensitive catalysts.

An object of the present invention is to provide a hydrocarbon fuel composition suitable for diesel engines.

The objects of the invention are achieved by a product characterized by what is stated in the independent claims. The preferred embodiments of the invention are disclosed in the dependent claims.

### DETAILED DESCRIPTION OF THE INVENTION

The present invention provides a hydrocarbon fuel composition suitable for diesel engines, the composition comprising
- a total paraffin content of from 55 wt.% to 65 wt.%, of which at least 93 % are isomerised paraffins,
- a total naphtenes content from 35 wt.% to 45 wt.%, of which at least 90 % are C18 to C20 naphtenes, and
- the balance to 100% being aromatics, wherein
the composition has a cloud point of -35 °C or below, preferably -40 °C or below.

Presented herein is a process outside of the scope invention for producing hydrocarbons from a feedstock comprising organic material of biological origin. The hydrocarbons of the invention obtained by the process herein described can be used as diesel fuel, diesel fuel component and/or jet fuel component.

Presented is a process outside of the scope invention for producing hydrocarbons from a feedstock comprising organic material of biological origin, the process comprising
a) providing a feedstock comprising organic material of biological origin,
b) pre-treating the feedstock in one or more pre-treatment stages to obtain a purified feedstock,
c) subjecting said purified feedstock to pre-hydrotreatment to obtain a stream of partly hydrotreated feed,
d) subjecting the stream of partly hydrotreated feed to hydrotreatment to obtain a stream of hydrocarbons,
e) subjecting the stream of hydrocarbons to isomerisation to obtain an isomerised stream of hydrocarbons, and
f) distilling the isomerised stream of hydrocarbons to obtain at least two fractions, a first heavy bottom fraction and a second middle fraction, which is collected as a product of hydrocarbons.

As used herein the term "organic material of biological origin" refers to organic material, i.e. material containing carbon. The organic material is of biological origin, i.e. from natural resource such as but not limited to plants, trees, algae, microbes but also animal sources are possible. Organic material of biological origin is here meant to exclude fossil based organic material. Organic material of biological origin as herein used can also be renewable material. The organic material suitable in the present process typically contain organic compounds such as fatty acids, resin and rosin acids and other lipophilic compounds but also other organic compounds.

Waste and residues containing organic material may further be used as feedstock, while containing compounds and/or impurities that are not allowed or just spoiling the usability thereof for e.g. food or feed or cosmetics applications.

The renewable character of carbon-containing compositions, such as feedstocks and products of biological origin i.e. renewable feedstock and products, can be determined by comparing the 14C-isotope content of the feedstock to the 14C-isotope content in the air in 1950. The 14C-isotope content can be used as evidence of the renewable origin of the feedstock or product. Carbon atoms of renewable material comprise a higher number of unstable radiocarbon (14C) atoms compared to carbon atoms of fossil origin. Therefore, it is possible to distinguish between carbon compounds derived from biological sources, and carbon compounds derived from fossil sources by analysing the ratio of 12C and 14C isotopes. Thus, a particular ratio of said isotopes can be used to identify and quantify renewable carbon compounds and differentiate those from non-renewable i.e. fossil carbon compounds. The isotope ratio does not change in the course of chemical reactions. Examples of a suitable method for analysing the content of carbon from biological sources is ASTM D6866 (2020). An example of how to apply ASTM D6866 to determine the renewable content in fuels is provided in the article of Dijs et al., Radiocarbon, 48(3), 2006, pp 315-323. For the purpose of the present process a carbon-containing material, such as a feedstock or product is considered to be of renewable origin if it contains 90% or more modern carbon, such as 100% modern carbon, as measured using ASTM D6866.

Particular examples of the feedstock comprising organic material of biological origin of the present process include, but are not limited to, animal based fats and oils, such as suet, tallow, blubber, lard, train oil, milk fat, fish oil, poultry oil, and poultry fat; plant based fats and oils, such as sludge palm oil, rape-seed oil, canola oil, colza oil, sunflower oil, soybean oil, hemp oil, olive oil, linseed oil, cottonseed oil, mustard oil, palm oil, arachis oil, castor oil, coconut oil, lignocellulosic pyrolysis liquid (LPL), HTL biocrude, crude tall oil (CTO), tall oil pitch (TOP), crude fatty acid (CFA), tall oil fatty acid (TOFA) and distilled tall oil (DTO); microbial oils; algal oils; recycled fats or various waste streams of the food industry, such as used cooking oil, yellow and brown greases; free fatty acids, any lipids containing phosphorous and/or metals, oils originating from yeast or mold products, recycled alimentary fats; starting materials produced by genetic engineering, and any mixtures of said feedstocks.

The feedstock comprising organic material of biological origin may comprise pitch containing crude tall oil (CTO), residue and waste oils from palm oil production and/or recycled fats and oils.

Organic material of biological origin used as feedstock may be selected from a group consisting of crude tall oil (CTO), tall oil pitch (TOP), tall oil fatty acid (TOFA), crude fatty acid (CFA) and distilled tall oil (DTO); more particularly the organic material of biological origin is crude tall oil (CTO) or tall oil pitch (TOP).

In addition or as an alternative the organic material of biological origin can also be selected from acid oils, such as acidulated soapstock (ASK), technical corn oil (TCO), plant oil from plants of the family Brassicaceae (carinata oil), palm effluent sludge (PES), used cooking oil (UCO), gutter oil and brown grease (BG).

As defined herein crude tall oil (CTO, CAS Registry Number 8002-26-4) is most frequently obtained as a by-product of either Kraft or Sulphite pulping processes and tall oil pitch (TOP, CAS number of 8016-81-7) is the residual bottom fraction from crude tall oil distillation processes.

Crude tall oil comprises resin acids, fatty acids, and unsaponifiables. Resin acids are a mixture of organic acids derived from oxidation and polymerization reactions of terpenes. The main resin acid in crude tall oil is abietic acid but abietic derivatives and other acids, such as pimaric acid are also found. Fatty acids are long chain monocarboxylic acids and are found in hardwoods and softwoods. The main fatty acids in crude tall oil are oleic, linoleic and palmitic acids. Unsaponifiables cannot be turned into soaps as they are neutral compounds which do not react with sodium hydroxide to form salts. They include sterols, higher alcohols and hydrocarbons. Sterols are steroids derivatives which also include a hydroxyl group. Typically, CTO feeds contain 48 wt.% fatty acids (e.g. oleic acid), 29wt.% resin acids (e.g. abietic acid) and 23wt.% neutrals (e.g. sterols).

Tall oil pitch (TOP) can be considered to be a UVCB substance (Substances of Unknown or Variable composition, Complex reaction product or Biological materials) under the REACH definition (ECHA; Guidance in a Nutshell, Identification and naming of substances under REACH and CLP; Version 2.0, April 2017). Composition of TOP according to Holmbom (1978) is presented in Table 1, wherein A, B, C, D denote ordinary grades of tall oil pitch received from three plants in Finland and E and F denote US grades investigated.

Tall oil pitch typically comprises from 34 to 51 wt.% free acids, from 23 to 37 wt.% esterified acids, and from 25 to 34 wt.% unsaponifiable neutral compounds of the total weight of the tall oil pitch. The free acids are typically selected from a group consisting of dehydroabietic acid, abietic and other resin acids. The esterified acids are typically selected from a group consisting of oleic and linoleic acids. The unsaponifiables neutral compounds are typically selected from a group consisting of diterpene sterols, fatty alcohols, sterols, and dehydrated sterols.

**Table 1. Component Group Composition of Tall Oil Pitch (wt.% of pitch)^{a}**

| **Constituents** | A | B | C | D | E | F |
|---|---|---|---|---|---|---|
| Free acids, total | 39.3 | 52.6 | 48.6 | 44.6 | 46.7 | 34.6 |
| Fatty acids | 1.4 | 1.8 | 1.3 | 0.8 | 1.3 | 2.4 |
| Resin acids | 10.6 | 12.5 | 9.7 | 6.1 | 3.3 | 6.5 |
| Other acids | 27.3 | 37.3 | 37.3 | 37.7 | 42.1 | 25.7 |
| Esterified acids, total | 30.6 | 23.2 | 23.3 | 26.8 | 27.9 | 37.8 |
| Fatty acids | 8.2 | 12.9 | 13.3 | 15.2 | 13.8 | 12.4 |
| Resin acids | 1.7 | 0.9 | 1.2 | 0.9 | 1.6 | 1.9 |
| Other acids | 20.7 | 9.4 | 8.8 | 10.7 | 12.5 | 23.5 |
| Equiv. weight for free acids | 648 | 591 | 716 | 642 | 873 | 719 |

| | | | | | | |
|---|---|---|---|---|---|---|
| a) Holmbom B, and Erä V, 1978. Composition of Tall oil pitch, Journal of the American oil chemistry society, 55, pp. 342-344. | | | | | | |

The term "crude fatty acid (CFA)" refers to fatty acid-containing materials obtainable by purification (e.g., distillation under reduced pressure, extraction, and/or crystallization) of CTO. The term "tall oil fatty acid (TOFA)" refers to fatty acid rich fraction of crude tall oil (CTO) distillation processes. TOFA typically comprises mainly fatty acids, typically at least 80 wt.% of the total weight of the TOFA. Typically, TOFA comprises less than 10 wt.% rosin acids.

The term "distilled tall oil (DTO)" refers to resin acid rich fraction of crude tall oil (CTO) distillation processes. DTO typically comprises mainly fatty acids, typically from 55 to 90 wt.%, and rosin acids, typically from 10 to 40 wt.% rosin acids, of the total weight of the DTO. Typically, DTO comprises less than 10 wt.% unsaponifiable neutral compounds of the total weight of the distilled tall oil.

Acid oils refers to by-products of alkali or physical refining of crude oils and fats. One example of acid oils are oils obtained by acidulation of soapstock (ASK), which contains free fatty acids, acylglycerols and other lipophilic compounds.

The term "technical corn oil" TCO refers to corn oil extracted through a dry milling process. In the dry milling process, corn grains are cleaned and ground directly to obtain a fine corn flour. This flour is then mixed with water, enzymes and other ingredients (cooking and liquefaction) to convert starch into simple sugars, then into glucose (saccharification). This glucose is fermented to produce ethanol, which is then removed by distillation and purified by dehydration. The remaining stillage (called distillers grain) is then processed further to expel technical corn oil (generally called "distillers corn oil" in the United States) through centrifugation. De-emulsifiers can be used to enhance separation of the TCO from the rest of the stillage.

The organic material can also comprise plant oil originating from a plant of the family Brassicaceae (carinata oil). The plant of the family Brassicaceae is selected from Brassica juncea (brown mustard), Brassica carinata (Ethiopian mustard), Brassica nigra (black mustard), Brassica rapa, Brassica rapa subsp. oleifera (field mustard), Brassica elongate (elongated mustard), Brassica nariosa (broad-baked mustard), Brassica rupestris (brown mustard), Brassica tournefortii (Asian mustard), Brassica napus, Brassica napus el, Sinapis hirta (mustard), Sinapis alba (white mustard), Sinapis arvensis, Nasturtium floridanum, Nasturtium gambel-lium, Nasturtium gronlandicum, Nasturtium microfullum, nasturtium officinale, Nasturtium sordidum and combinations thereof. Preferably the plant is Brassica carinata.

The term "palm effluent sludge" (PES), also commonly referred to, as palm oil mill effluent (POME) here refers to the voluminous liquid waste that comes from the sterilisation and clarification processes in milling oil palm. The raw effluent contains 90-95% water and includes residual oil, soil particles and suspended solids.

The term "used cooking oil" (UCO) refers to oils and fats that have been used for cooking or frying in the food processing industry, restaurants, fast foods and at consumer level, in households.

Gutter oil is a general term for oil that has been recycled. It can be used to describe the practice of restaurants re-using cooking oil that has already been fried before.

Brown grease (BG) means an emulsion of fat, oil, grease, solids, and water separated from wastewater in a grease interceptor (grease trap) and collected for use as feedstock.

The organic material of biological origin may comprise crude tall oil (CTO) optionally including tall oil pitch (TOP), tall oil pitch (TOP), brown grease (BG), acidulated soapstock (ASK), technical corn oil (TCO), low quality animal fat (AF), Brassica carinata (BC), palm effluent sludge (PES) or any combination thereof, wherein these materials typically contain difficult to remove heavy molecular weight compound, metal or phosphorus containing impurities.

The feedstock may comprise crude tall oil (CTO), tall oil pitch (TOP), brown grease (BG) and acidulated soapstock (ASK) and palm effluent sludge (PES).

The feedstock comprising organic material of biological origin may comprise crude tall oil (CTO) and/or tall oil pitch (TOP). In one embodiment the feedstock comprising organic material of biological origin comprises resin acids from 10 wt.% to 30 wt.%, based on the total feedstock.

The process presented hereinfurther comprises a step of pre-treating the feedstock in one or more pre-treatment stages. The pre-treatment stages vary and are selected based on the feedstock and especially on the amount and type of impurities in the feedstock. The pre-treatment stages can be selected from heat treatment optionally followed by evaporation of volatiles; heat treatment with adsorbent (HTA) optionally followed by flash evaporation; degumming; bleaching or any combination thereof. The pre-treatment also typically comprises a step of removing impurities from the feedstock, including any suitable removal of solids from a liquid, including filtration, centrifugation and sedimentation; and removing volatiles from liquid, e.g. by evaporation. In the pre-treatment the feedstock comprising organic material of biological origin, as previously defined, is purified and a purified feedstock is obtained. With purification is meant herein that the amount of at least one impurity, such as metal impurity, phosphorus and silicon, is decreased in the feedstock as a result of the pre-treatment.

The pre-treatment may be selected from heat treatment optionally followed by evaporation of volatiles, whereby the feedstock is heated at a temperature of from 80 °C to 325 °C, preferably 180 °C to 300 °C, more preferably 200 °C to 280 °C, in a residence time from 1 to 300 min. The heat treatment can follow by an evaporation step, where especially silicon and phosphorous containing compounds are removed. An example of heat treatment of a feedstock comprising organic material can be found in WO 2020/016405. Heat treatment can also be followed by filtration as an addition or an alternative to evaporation. When the feedstock comprises brown grease or acidulated soapstock the pre-treatment comprising heat treatment with or without filter-aid (adsorbent) followed by filtration and possible bleaching.

The pre-treatment may be selected from heat treatment with adsorbent (HTA) optionally followed by flash evaporation. HTA as pre-treatment is especially suitable when the feedstock comprises CTO and/or TOP, but also for other feedstock. Heat treatment with adsorbent (HTA) can be performed in a temperature from 180 °C to 325 °C, preferably from 200 °C to 300 °C, more preferably from 240 °C to 280 °C, optionally in the presence of an acid. The adsorbent can be selected from alumina silicate, silica gel and mixtures thereof and is typically added in an amount of 0.1 wt.% to 10 wt.%, such as 0.5 wt.%. An example of HTA can be found in WO 2020/016410.

The pre-treatment may be selected from bleaching. Bleaching can be conducted by acid addition in an amount of from 500 to 5000 ppm based on feed. The bleaching treatment can be performed in a temperature from 60 °C to 90 °C and including a drying step in 110 °C to 130 °C. The bleaching is finished by a filtration step to remove formed solids and possible filter aids. In one example bleaching includes the following sequence
(1) acid addition 1000-4000 ppm citric acid (50% water) 85 °C, 10 min;
(2) adsorbent/filter aid addition 0.1-1 wt.%, 85 °C, 800 mbar, 20 min;
(3) drying 120 °C, 80 mbar, 25 min
(4) filtering 120 °C, 2.5bar.

Both heat treatment (HT) and heat treatment with adsorbent (HTA) can be performed under pressure, the pressure can be 500 to 5000 kPa. Also water can be added before or during HT and HTA to a level of up to 5 wt.%, such as 1 wt.% - 3 wt.%. The evaporation, e.g. performed by flashing can be performed after HT or HTA or any other pre-treatment stage and can be performed at about 160 °C, such as from 150 °C to 225 °C, in a pressure of 10 to 100 mbar (0.1 to 5 kPa).

For a feedstock comprising palm oil effluent sludge (PES) the pre-treatment can comprise acid degumming followed by solid removal from the liquid, using filtration of centrifugation. The degumming process can further be followed by a bleaching step.

The pre-treatment, may comprise heat treatment (HT) and bleaching.

The pre-treatment, may comprise heat treatment (HT) with alkali addition and bleaching.

The pre-treatment, may comprise heat treatment with adsorption (HTA) followed by flash (removal of light components comprising Si components etc. by evaporation) and bleaching,

In addition, the pre-treatment may or may not include additional steps such as removal of solids (using technologies such as centrifugation or filtration) before and/or after HT or HTA, water washing, degumming, hydrolysis, distillation, strong acid treatment, 2nd bleaching or any combination of the mentioned methods.

The level and type of impurities vary with the organic material, but can also vary from one feedstock to another depending on source and how the organic material have been treated. Typical impurity levels of the most significant impurities are listed in Table 2 below.

**Table 2. Typical impurities and ranges in different organic materials**

| | P (ppm) | N (ppm) | Si (ppm) | Tot Cl (ppm) | metals* (ppm) |
|---|---|---|---|---|---|
| CTO | 1-100 | 100-500 | 1-100 | 1-10 | 10-1000 |
| TOP | 1-200 | 100-1500 | 1-500 | 1-20 | 30-1500 |
| PES | 5-100 | 30-500 | 0-100 | 1-50 | 20-1200 |
| UCO | 0-500 | 1-600 | 0-50 | 1-300 | 1-1000 |
| BG | 5-3500 | 50-5000 | 0-50 | 1-300 | 10-20000 |
| TCO | 0-100 | 20-100 | 0-20 | 1-20 | 1-200 |
| BC | 0-50 | 30-100 | 0-1 | 0-5 | 1-100 |
| AF | 0-700 | 1-3000 | 0-30 | 1-100 | 0-600 |

| | | | | | |
|---|---|---|---|---|---|
| Metals = Ca, Mg, Na, Fe; in total | | | | | |

Different organic materials can be blended in the final feedstock to avoid unwanted reactions. For example, if the feed Cl content is over 100 ppm and simultaneously N content is over 1000 ppm it is possible that ammonium chloride NH₄Cl precipitation reaction takes place in pre-hydrotreatment step. In order to avoid this, organic material like BG, having a high Cl content and a high N content, are blended with organic material having a low Cl and/or N content, such as PES.

The feedstock comprising organic material of biological origin may comprise an impurity level of
- nitrogen compounds from more than 30 ppm, preferably more than 50 ppm or 100 ppm, such as up to 5000 ppm;
- silicon compounds from more than 1 ppm, preferably more than 5 ppm or more than 10 ppm or 30 ppm, up to 500 ppm;
- phosphorous compounds from more than 5 ppm, preferably more than 10 ppm or 50 ppm, up to 3500 ppm;
- chloride from more than 1 ppm, preferably more than 5 ppm or 10 ppm, up to 300 ppm; and/or
- metals from more than 10 ppm, preferably more than 30 ppm or 50 ppm, up to 20000 ppm.

The amount of metals are given as the total sum of at least Ca, Mg, Na and Fe.

At least one impurity selected from nitrogen, silicon, phosphorous, chloride and metals, may be present in the feedstock prior to pre-treatment in high amount, such as for nitrogen over 1000 ppm, silicon over 100 ppm, phosphorous over 700 ppm, chloride over 60 ppm or metals over 4000 ppm.

Further presented here is a step of subjecting the purified feedstock to pre-hydrotreatment to obtain a stream of partly hydrotreated feed. The pre-hydrotreatment can also be called pre-hydrodeoxygenation or pre-HDO. The aim of the pre-hydrotreatment is to prepare the purified feed to the subsequent processes and also partly to function as a further purification step for the purified feedstock.

As an example, the pre-hydrotreatment may be performed in conditions selected from:
- a temperature range of 300 °C to 380 °C, preferably of 320 °C to 360 °C;
- a pressure range of 40 to 100 bar, preferably 40 to 80 bar, more preferably 50 to 70 bar;
- a weight hourly space velocity (WHSV) of 0.2 1/h to 10 1/h, preferably 0.25 1/h to 10 1/h, or more preferably 0.3 1/h to 8 1/h; and
- a H₂/oil feed of 800 dm³/dm³ to 1200 dm³/dm³, preferably of 900 dm³/dm³ to 1100 dm³/dm³.

The catalyst used in the pre-hydrotreatment step is a typical hydrotreating catalyst such as Ni, Co, Mo, W or any combination thereof on a carrier such as alumina. Alternatively or in addition the catalyst in pre-hydrotreatment can also be a typically hydrocracking catalyst such as NiW on acidic supports (ASA, Zeolites). In one embodiment the catalyst in the pre-hydrotreatment is NiMo on alumina carrier. The pre-treatment step is typically carried out in a reactor with one or more catalyst beds. The extent of the pre-hydrotreatment depends on the organic material and level of impurities. The aim of the pre-treatment is to prepare the feed, e.g. to remove heteroatoms and other impurities, to such a level that the hydrotreatment can remove the rest of the heteroatoms and impurities prior to the isomerization.

As the purified feedstock subjected to the pre-hydrotreatment typically still, after pretreatment, contains heteroatoms, such as oxygen and nitrogen, the decrease of the amount of oxygen and/or nitrogen in the heteroatom containing feed compounds, such as triglycerides, may be depicted by using the term oxygen conversion. In this disclosure the term "oxygen conversion" is taken to mean the depletion, by a deoxygenation reaction, of the amount of oxygen contained in or bound to oxygen-containing feed compounds wherein the oxygen is depleted or removed from said feed compound. For example, oxygen contained in fatty acid is reacted with hydrogen (hydrodeoxygenation) to form water, which can be removed as a gaseous by-product and the corresponding oxygen depleted or oxygen-free hydrocarbon, thus formed at a 100% oxygen conversion.

The oxygen conversion of the purified feedstock in the pre-hydrotreatment step, may be adjusted to at least 60 %, preferably at least 70 %, more preferably at least 80 %, such as at least 90 % or even at least 95 %. The maximum oxygen conversion in pre-hydrotreatment step is 99 %. This is the conversion of oxygen containing compounds to oxygen-free compounds. The aim is to remove most of the oxygen already in the pre-hydrotreatment to allow optimal removal conditions for other heteroatoms, such as nitrogen, in the hydrotreatment step.

The nitrogen conversion of the purified feedstock in the pre-hydrotreatment step may, for example, be lower than the oxygen conversion, such as 4 percentage points or 10 percentage points lower than the oxygen conversion. In one embodiment the nitrogen conversion of the purified feedstock in the pre-hydrotreatment step, is adjusted to at least 55 %, preferably at least 65 %, more preferably at least 75 %, such as at least 90 %. The maximum nitrogen conversion in pre-hydrotreatment step is 95 %. The term "nitrogen conversion" is applied similarly to oxygen conversion and is herein taken to mean the conversion of nitrogen containing compounds to nitrogen-free compounds. Nitrogen in the nitrogen containing compounds also react with hydrogen and forms e.g. NH₃, which can be removed as a gaseous by-product.

The conditions for pre-hydrotreatment and hydrotreatment may be different from each other, particularly the temperature of hydrotreatment is at least 10°C higher than in the pre-hydrotreatment.

Hydrodenitrogenation (HDN) of nitrogen containing compounds is typically more difficult than the hydrodeoxygenation (HDO) of oxygen containing compounds. The amount of HDN and HDO can be controlled by adjusting the hydrotreatment conditions, such as temperature, pressure, weight hourly space velocity (WHSV) and/or catalyst.

The pre-hydrotreatment step is meant to remove a major part of the heteroatoms and those other impurities, such as metals and phosphorus, still left after the pre-treatment. In one embodiment of the present process the pre-hydrotreatment is carried out such that the amount of nitrogen is removed by at least 80 wt.% and oxygen by at least 90 wt.% in the partly hydrotreated feed as compared to the purified feedstock entering the pre-hydrotreatment step.

Overall hydrotreatment (including pre-hydrotreatment and hydrotreatment) may be adjusted such that at least 80 %, preferably at least 90 %, more preferably at least 95 %, of the total oxygen conversion is conducted in the pre-hydrotreatment step.

Overall hydrotreatment (including pre-hydrotreatment and hydrotreatment) may be adjusted such that at least 60 %, preferably at least 70 %, more preferably at least 80 %, of the total nitrogen conversion is conducted in the pre-hydrotreatment step.

The pre-hydrotreatment step is meant to remove a major part of the heteroatoms and those other impurities still left after the pre-treatment. In one embodiment of the present process the pre-hydrotreatment is carried out such that the amount of nitrogen is removed by at least 80 wt.%, oxygen by at least 90 wt.% and phosphorous by at least 95 wt.% in the partly hydrotreated feed.

These high levels of removal of heteroatoms and impurities shows that major part of the removal of heteroatoms as well as impurities takes place in pre-hydrotreatment compared to the hydrotreatment step. Thereby, more adverse effect, such as formation of water and ammonia and catalyst de-activation, takes place in the pre-hydrotreatment step. The catalyst in the pre-hydrotreatment can be changed frequently, while the catalyst in the hydrotreatment step stays fresh. This arrangement enables one to avoid a total shut down due to a catalyst change and still be able to continue production using either the mere hydrotreatment catalyst, or a combination of a spare pre-hydrotreatment unit together with the hydrotreatment unit. Moreover, the influence of corrosion due to acidic feeds may be mitigated. Also, fresh hydrogen can be introduced to the hydrotreatment step, which enables highly efficient conversion. Since major part of the conversion takes place in pre-hydrotreatment, the hydrotreatment step can be controlled such that the hydrotreated product is of high quality.

In the pre-hydrotreatment the partly hydrotreated feed withdrawn from the reactor, can be recycled in a relatively high ratio. The ratio of recycled partly hydrotreated feed to fresh purified feedstock in the pre-hydrotreatment step can be from 1:1 to 15:1, preferably 1:1 to 10:1 and more preferably 1:1 to 5:1.

One aim of the present method or process hereby disclosed is therefore to lower the amount of heteroatoms and impurities by a combination of pre-treatment and pre-hydrotreatment. Examples of levels of impurities before pre-treatment is given in Table 3, which also shows typical amounts of impurities still left in the feedstock prior to the pre-hydrotreatment (pre-HDO) step.

The process further comprises subjecting stream of partly hydrotreated feed to hydrotreatment to obtain a stream of hydrocarbons and subjecting the stream of hydrocarbons to isomerization to obtain an isomerized stream of hydrocarbons.

**Table 3. Examples of levels of impurities before pre-treatment and before pre-hydrotreatment (pre-HDO)**

| Impurity | Unit | Typical impurity levels | |
|---|---|---|---|
| | | Pretreatment | Pre-HDO |
| Water | wt.% | <2 | No free water |
| Chloride | ppm | < 100 | < 100 |
| Metals (Ca, Mg, Na, Fe), Total | ppm | < 1000 | < 1.5 |
| Phosphorus, Total | ppm | < 500 | <1.5 |
| Nitrogen, Total | ppm | < 600 | < 500 |
| Silicon, Total | ppm | < 100 | < 2.0 |
| Solids | wt.% | < 1 | To min. |

It should be noted that ppm (part per million) corresponds to mg/kg.

In one embodiment of the present process the hydrotreatment is performed in conditions selected from:
- a temperature range of 300 °C to 380 °C, preferably of 320 °C to 360 °C;
- a pressure range of 40 to 80 bar, preferably 50 to 70 bar;
- a weight hourly space velocity (WHSV) of 0.25 1/h to 1.5 1/h, preferably 0.3 1/h to 1 1/h; and
- a H₂/oil feed of 800 dm³/dm³ to 1200 dm³/dm³, preferably of 900 dm³/dm³ to 1100 dm³/dm³.

The catalyst used in the hydrotreatment step is a typical hydrotreating catalyst such as Ni, Co, Mo, W or any combination thereof on a carrier such as alumina. Alternatively or in addition, the catalyst in the hydrotreatment can also be a typically hydrocracking catalyst such as NiW on acidic supports (ASA, Zeolites). In one embodiment the catalyst in the hydrotreatment is NiMo on alumina carrier. The treatment step is typically carried out in a reactor with one or more catalyst beds.

In the hydrotreatment step there is typically no recycling of the stream of hydrocarbon withdrawn from the reactor. If there is any recycling in the hydrotreatment step a maximum of 10 wt.% of the stream of hydrocarbons is recycled back to hydrotreatment. In one embodiment the hydrotreatment step does not contain any recycling.

The aim of the hydrotreatment is to essentially remove all impurities and heteroatoms from the feed, and the stream of hydrocarbons should therefore essentially only contain hydrocarbons.

The isomerization of the stream of hydrocarbons to obtain a stream of isomerized hydrocarbons may, for example, be performed in conditions selected from:
- a temperature range of 300 °C to 360 °C, preferably 310 °C to 345 °C;
- a pressure range of 35 bar to 60 bar, preferably 40 bar to 50 bar;
- a weight hourly space velocity (WHSV) of 1 1/h to 1.5 1/h.

The catalyst used in the isomerization of the stream of hydrocarbons is any typical isomerization catalyst, such as Pt or Pd on a suitable support, preferably the isomerization catalyst is Pt-SAPO11.

The process further comprises distilling the isomerized stream of hydrocarbons to obtain at least two fractions. The two fractions are a first heavy bottom fraction and a second middle fraction. The first heavy bottom fraction is typically removed from the present process and the middle fraction is collected as hydrocarbon product. The first heavy bottom fraction can be characterized such that at least 90% of the components (compounds) of the first heavy bottom fraction have a boiling point of 360 °C or above. The second middle fraction can be characterized such that at least 90 % of the components (compounds) of the second middle fraction have a boiling point of from 180 °C to 360 °C. All boiling points are given in atmospheric pressure. The first heavy bottom fraction can be used as a product as such or subjected to other processes (not disclosed here).

The distillation may be performed using the following conditions: a cut point target of 340 °C to 360 °C, vacuum set point of 2 mbar, top column temperature of 180 °C, nitrogen feed rate of 2 l/h and feed rate of 0.24 l/h. These conditions are to be regarded as examples and a skilled person is able to operate the distillation such that the target fractions are obtained.

The process may further comprise a stripping step to remove gaseous compounds from a stream of the process. The stripping step can be performed after the pre-treatment step, the pre-hydrotreatment step, the hydrotreatment step, the isomerization step or any combination thereof. In one embodiment the stripping is performed after the pre-hydrotreatment step to remove gaseous compounds before the distillation step. Gaseous compounds which can be removed in a stripping step include sulphide (H₂S), ammonia (NH₃) and water. The stripping step can also be called a flash step or flash evaporation or flash distillation.

In the process said feedstock comprising organic material of biological origin has prior to the pre-treatment step preferably not been distilled or evaporated, such that the gaseous fraction is collected for further processing steps and residue or liquid fraction is discarded.

The present invention provides a hydrocarbon fuel composition suitable for diesel engines, the composition comprising
- a total paraffin content of from 55 wt.% to 65 wt.%, of which at least 93 % are isomerised paraffins,
- a total naphtenes content from 35 wt.% to 45 wt.%, of which at least 90 % are C18 to C20 naphtenes, and
- the balance to 100% being aromatics, wherein
the composition has a cloud point of -35 °C or below, preferably -40 °C or below.

In one embodiment of the invention the hydrocarbon fuel components has an aromatics content of at most 4 wt.% of the total composition. The composition can have a cetane number of at least 59. Preferably the hydrocarbon fuel composition is produced by any of the processes or methods hereby described.

### EXAMPLE

A feed of crude tall oil (CTO) which also contains tall oil pitch (TOP) was pre-treated according to the described process. The pre-treated feed was subjected to pre-hydrotreatment at a pressure of 50 bar, a temperature of 340 - 350 °C, a WHSV of 0.33 1/h (calculated from fresh feed) and a fresh feed vs recycle feed of 1:12. The H₂/Oil was 1000 dm³/dm³ and the catalyst used was a NiMo catalyst on alumina carrier. The yield of the pre-hydrotreatment was 86-95 %.

The partly hydrotreated feed from pre-hydrotreatment was then subjected to hydrotreatment. The same equipment was used, but the conditions were changed. The temperature in the hydrotreatment was 330 - 350 °C, the pressure 50 bar and WHSV 0.60 1/h and H₂/Oil was 1000 dm³/dm³. No recycle was used.

The thus hydrotreated feed was then subjected to isomerisation in the following conditions: temperature 320 °C or 328 °C, pressure 40 bar, WHSV 1.5 1/h. The catalyst in isomerisation was Pt-SAPO11.

The product from isomerisation was distilled using a batch vacuum distillation unit. The cut point target was 360 °C and vacuum was set to 1 mbar (values varied from 0.7 to 1.1 mbar). The distillate yield was about 68%. The product collected was analysed and the results are presented below.

The product analysis of the distilled product is shown in table 4.
Two different isomerisation were run, ISOM1 in 320 °C and ISOM2 in 328 °C.

**Table 4. Product analysis of hydrocarbon product**

| | **ISOM1** | **ISOM2** |
|---|---|---|
| Total P wt.% | 60,40 | 56,1 |
| nP wt.% | 3,80 | 2,6 |
| iP wt.% | 56,60 | 53,5 |
| Naphtnes wt.% | 37,10 | 41,8 |
| Aromatics wt.% | 2,50 | 2,1 |
| Cloud Point C | -36 | -43 |

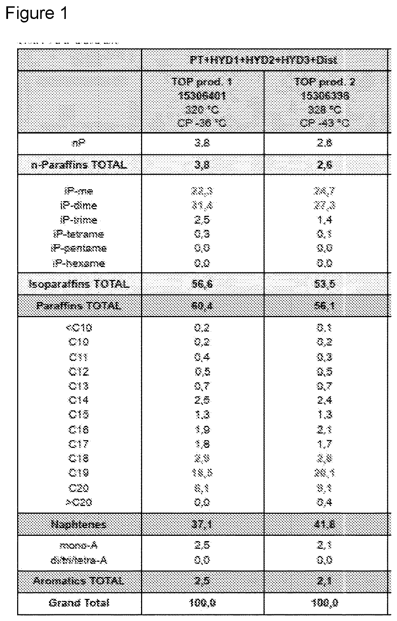

Total P means total paraffins, nP is normal (straight chain) paraffins, iP is isomerised (branched) paraffins. More detail information of the products can be seen in figure 1. In the table of figure 1, PT mean pre-treatment; HYD1 mean pre-hydrotreatment; HYD2 mean hydrotreatment; HYD3 mean isomerisation.

It will be obvious to a person skilled in the art that, as the technology advances, the inventive concept can be implemented in various ways. The invention and its embodiments are not limited to the examples described above but may vary within the scope of the claims.

## Claims

1. A hydrocarbon fuel composition suitable for diesel engines, the composition comprising
- a total paraffin content of from 55 wt.% to 65 wt.%, of which at least 93 % are isomerised paraffins,
- a total naphthenes content from 35 wt.% to 45 wt.%, of which at least 90 % are C18 to C20 naphthenes, and
- the balance to 100% being aromatics, wherein
the composition has a cloud point of -35 °C or below, preferably -40 °C or below.

2. The hydrocarbon fuel composition of claim 1, wherein the aromatics content is at most 4 wt.% of the total composition.

3. The hydrocarbon fuel composition of claim 1 or 2, wherein the cetane number of the fuel composition is at least 59.

## Patentansprüche

1. Kohlenwasserstoff-Brennstoffzusammensetzung, die für Dieselmotoren geeignet ist, wobei die Zusammensetzung umfasst
- einen Gesamtgehalt an Paraffinen von 55 Gew.-% bis 65 Gew.-%, von denen mindestens 93 % isomerisierte Paraffine sind,
- einen Gesamtgehalt an Naphthenen von 35 Gew.-% bis 45 Gew.-%, von denen mindestens 90 % C18- bis C20-Naphthene sind, und
- wobei der Rest bis 100% Aromaten sind, wobei die Zusammensetzung einen Trübungspunkt von -35 °C oder darunter aufweist, bevorzugt -40 °C oder darunter.

2. Kohlenwasserstoff-Brennstoffzusammensetzung nach Anspruch 1, wobei der Aromatengehalt höchstens 4 Gew.-% der gesamten Zusammensetzung beträgt.

3. Kohlenwasserstoff-Brennstoffzusammensetzung nach Anspruch 1 oder 2, wobei die Cetanzahl der Brennstoffzusammensetzung mindestens 59 beträgt.

## Revendications

1. Composition de carburant d'hydrocarbures adaptée à des moteurs diesel, la composition comprenant
- une teneur totale en paraffines allant de 55 % en poids à 65 % en poids, dont au moins 93 % sont des paraffines isomérisées,
- une teneur totale en naphtènes de 35 % en poids à 45 % en poids, dont au moins 90 % sont des naphtènes en C18 à C20, et
- le complément à 100 % étant constitué d'hydrocarbures aromatiques, dans laquelle
la composition présente un point de trouble de -35 °C ou au-dessous, de préférence de -40 °C ou au-dessous.

2. Composition de carburant d'hydrocarbures selon la revendication 1, dans laquelle la teneur en hydrocarbures aromatiques est au plus de 4 % en poids de la composition totale.

3. Composition de carburant d'hydrocarbures selon la revendication 1 ou la revendication 2, dans laquelle l'indice de cétane de la composition de carburant est d'au moins 59.
